# EUROPÄISCHE PATENTSCHRIFT

(11) **EP 2 387 674 B1**
(45) Veröffentlichungstag und Bekanntmachung des Hinweises auf die Patenterteilung: **15.05.2013**
(21) Anmeldenummer: 09804244.3
(22) Anmeldetag: 22.12.2009
(51) Int. Cl.: F16D 25/0638, F16D 25/10, F16D 21/06, F16D 3/66

(54) **MEHRFACHKUPPLUNGSVORRICHTUNG**
MULTIPLE CLUTCH DEVICE
SYSTÈME À EMBRAYAGES MULTIPLES

(30) Priorität: 19.01.2009 DE 102009005075; 09.03.2009 DE 102009012207
(43) Veröffentlichungstag der Anmeldung: 23.11.2011
(73) Patentinhaber: Schaeffler Technologies AG & Co. KG, 91074 Herzogenaurach (DE)
(72) Erfinder: ARNOLD, Johannes, 77855 Achern (DE); NÖHL, Oliver, 77830 Bühlertal (DE); AGNER, Ivo, 77815 Bühl (DE)
(86) Internationale Anmeldenummer: PCT/DE2009/001809
(87) Internationale Veröffentlichungsnummer: WO 2010/081454

(56) Entgegenhaltungen:
- EP-A1- 1 226 992
- EP-A2- 1 548 313
- DE-A1- 10 301 405
- DE-A1-102006 010 707
- DE-A1-102006 049 731

## Beschreibung

Die vorliegende Erfindung betrifft eine Mehrfachkupplungsvorrichtung für einen Antriebsstrang mit einer Antriebseinheit und einem nachfolgend angeordneten Getriebe, die mit einer Antriebswelle der Antriebseinheit verbunden und in einer nicht mit der Antriebswelle der Antriebseinheit mitrotierenden Kupplungsglocke aufgenommen ist, mit zwei Lamellenkupplungen, die jeweils einen eingangsseitigen und ausgangsseitigen Lamellenträger und sich in axialer Richtung abwechselnde Lamellen aufweisen und mit einer Betätigungseinrichtung.

Aus der DE 10 2006 049 731 ist eine derartige Doppelkupplungsvorrichtung bekannt. Bei dieser Doppelkupplung muss eine von der Betätigungseinrichtung erzeugte Betätigungskraft über den eingangsseitigen Lamellenträger, ein Stützlager und einen an der Kupplungslocke fest angebundenen Kupplungsdeckel abgestützt werden. Hierfür sind der eingangsseitige Lamellenträger, das Stützlager und der Kupplungsdeckel entsprechend stark zu dimensionieren, wobei die jeweilige Betätigungskraft von dem zu übertragenden Drehmoment abhängt. Bei steigendem Drehmoment ist dementsprechend eine entsprechend höhere Betätigungskraft und eine entsprechend stärke Dimensionierung, insbesondere des Kupplungsdeckels, notwendig.

Dokument EP 1 548313 zeigt eine andere Doppelkupplungsvorrichtung.

Es ist eine Aufgabe der vorliegenden Erfindung, eine Mehrfachkupplungsvorrichtung der Eingangs genannten Art mit verbesserter Abstützung einer Betätigungskraft einzugeben. Dieser Aufgabe wird erfindungsgemäß gelöst durch eine Mehrfachkupplungsvorrichtung mit den Merkmalen des Patentanspruches 1. Bevorzugte Ausführungsbeispiele dieser Mehrfachkupplungsvorrichtung sind Gegenstand der abhängigen Patentansprüche.

Derzeit wird aus Energieeffizienzgründen versucht, eine Gesamtzahl an Zylindern von Brennungsmotoren zu reduzieren, insbesondere sind 2- bzw. 3-Zylindermotoren in Entwicklung. Mit einer verringerten Anzahl an Zylinder steigt aber eine Laufunruhe der Antriebseinheiten an. Mit steigender Laufunruhe der Antriebseinheiten müssen auch die Drehschwingungsdämpfer, wie beispielsweise Zweimassenschwungräder, neu dimensioniert werden, wodurch der axiale Bauraumbedarf der Doppelkupplung steigt.

Es ist eine weitere Aufgabe der vorliegenden Erfindung eine Mehrfachkupplungsvorrichtung der Eingangs genannten Art mit verbesserter Schwingungsdämpfung bei nicht wesentlich verändertem Bauraumbedarf anzugeben. Diese weitere Aufgabe wird erfindungsgemäß gelöst durch eine Mehrfachkupplungsvorrichtung mit den Merkmalen des Patentanspruches 12.

Die vorliegende Erfindung wird nachfolgend anhand bevorzugter Ausführungsbeispiele in Verbindung mit den zugehörigen Figuren näher erläutert. In diesen zeigen:
- Fig. 1: Ein Halbschnitt einer Doppelkupplung gemäß einem ersten Ausführungsbeispiel,
- Fig. 2: eine schematische Darstellung des internen Kraftflusses der radial innen angeordneten Lamellenkupplung K2 bei deren Betätigung für die Doppelkupplung nach Fig. 1,
- Fig. 3: eine schematische Darstellung der Lagerung der Doppelkupplung nach Fig. 1 und Fig. 2,
- Fig. 4: ein Halbschnitt der Doppelkupplung nach einem weiteren Ausführungsbeispiel in einen spielfreien Lamellenträger und
- Fig. 5 und 6: schematische Darstellungen betreffend gebauter Lamellenträger.

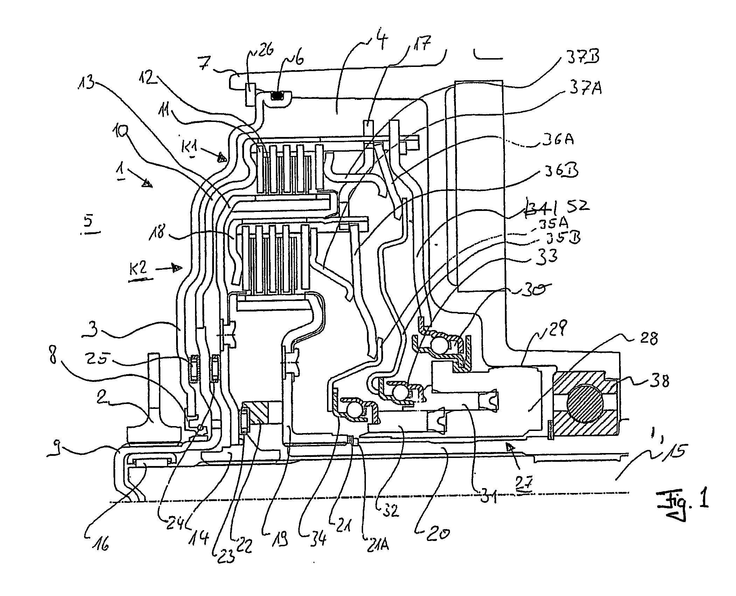

Fig. 1 zeigt eine Doppelkupplung 1 bestehend aus zwei radial geschachtelten nasslaufenden Lamellenkupplungen K1 und K2. Kupplung K1 ist dabei radial außen und Kupplung K2 ist dabei radial innen angeordnet. Die Doppelkupplung 1 wird von einer Abtriebsnabe 2 eines der Kupplung 1 vorgeschalteten Zweimassenschwungrades (nicht im Einzelnen gezeigt) angetrieben.

Zwischen diesem Zweimassenschwungrad und der Doppelkupplung 1 befindet sich ein Kupplungsdeckel 3, der einen Nassraum 4 von einem Trockenraum 5 trennt. Eine statische Abdichtung 6 des Kupplungsdeckels 3 hin zu einem Getriebegehäuse 7 eines im Antriebstrang nachfolgend angeordneten Getriebes (nicht im Einzelnen gezeigt) erfolgt vorzugsweise über einen O-Ring 6 oder ein sonstiges statisches Dichtelement.

Zur Doppelkupplung 1 hin erfolgt die Abdichtung im vorzugsweise über einen Radialwellendichtring 8 als einem dynamischen Dichtelement.

Die Abtriebsnabe 2 des Zweimassenschwungrades (im Folgenden auch abkürzend als ZMS bezeichnet) ist über eine Verzahnung mit einer Kupplungsnabe 9 drehfest verbunden. Die Kupplungsnabe 9 ist verbunden mit dem eingangsseitigen Lamellenträger 10 der in der radialen Schachtelung außen angeordneten Kupplung K1. Der eingangsseitige Lamellenträger 10 der Lamellenkupplung K1 und die mit diesem fest verbundene Kupplungsnabe 9 sind über ein Radiallager 16 an der ersten Getriebeeingangswelle 15 (die als Vollwelle ausgebildet ist) radial abgestützt. Der eingangsseitige Lamellenträger 10 umfasst Verzahnungsbereiche an denen eingangsseitige Lamellen des Lamellenpakets der Lamellenkupplung K1 eingehängt sind, so dass die eingangsseitigen Lamellen 11 drehfest und axial verlagerbar angeordnet sind. Die eingangsseitigen Lamellen 11 sind alternierend zu abtriebsseitigen Lamellen 12 angeordnet, wobei die eingangsseitigen Lamellen 11 und die alternierend angeordneten abtriebsseitigen Lamellen 12 gemeinsam das Lamellenpaket der Kupplung K1 bilden. Die abtriebsseitigen Lamellen 12 sind drehfest und axial verlagerbar mit einem abtriebsseitigen Lamellenträger 13 der äußeren Lamellenkupplung K1 verbunden. Der abtriebsseitige Lamellenträger 13 der Lamellenkupplung K1 umfasst eine Nabe 14, welche mit einer ersten Getriebeeingangswelle 15 eines nicht im Einzelnen gezeigten Doppelkupplungsgetriebes verbunden ist.

Der eingangsseitige Lamellenträger 10 der äußeren Lamellenkupplung K1 ist über das Verbindungsblech 17, das am Verzahnungsbereich des Lamellenträgers 10 eingehängt ist mit dem eingangsseitigen Lamellenträger 18 der radial innen angeordneten Lamellenkupplung K2 verbunden. Die eingangsseitigen Lamellen der radial innen angeordneten Lamellenkupplung K2 sind in einem Verzahnungsbereich drehfest und axial verlagerbar eingehängt. Die eingangsseitigen Lamellen der radial innen angeordneten Kupplung K2 sind alternierend zu ausgangsseitigen Lamellen angeordnet, welche an einem abtriebsseitigen Lamellenträger 19 der Lamellenkupplung K2 drehfest und axial verlagerbar angeordnet sind. Der abtriebsseitige Lamellenträger 19 weist einen Nabenbereich auf, an welchem der abtriebsseitige Lamellenträger 19 mit einer zweiten Getriebeeingangswelle 20 (die als Hohlwelle ausgebildet ist) verbunden ist.

Der abtriebsseitige Lamellenträger 19 der radial innen angeordneten Lamellenkupplung K2 wird über eine Wellfeder 21 (und falls konstruktionsbedingt notwendig auch über ein Verbindungsstück 22) unter Zwischenlage eines Lagers 23 gegen den ausgangsseitigen Lamellenträger 13 der radial außen angeordneten Lamellenkupplung K1 gedrückt. Der abtriebsseitige Lamellenträger 13 der radial außen angeordneten Lamellenkupplung K1 wird wiederum unter Zwischenlage des weiteren Lagers 24 gegen den eingangsseitigen Lamellenträger 10 der radial außen angeordneten Lamellenkupplung K1 gedrückt. Der eingangsseitige Lamellenträger 10 der radial außen angeordneten Lamellenkupplung K1 wird wiederum unter Zwischenlage eines weiteren Lagers 25 gegen den Kupplungsdeckel 3 gedrückt, welcher sich über das Sicherungselement 26 am Gehäuse 7 des Getriebes abstützt. Wie insbesondere Fig. 1 entnehmbar, sind die Lager 23, 24, 25 vorzugsweise als Axial(nadel)lager ausgebildet.

Die Getriebeeingangswellen 15, 20 sind vorliegend koaxial und ineinander geschachtelt angeordnet, wobei die äußere Getriebeeingangswelle 20 über ein Stützlager 38 im Gehäuse 7 abgestützt ist, und wobei die innere Getriebeeingangswelle 15 über ein Lagerung in der äußeren Hohlwelle 20 abgestützt ist.

Die Doppelkupplung 1 umfasst weiterhin eine Betätigungseinrichtung 27, die als zentraler Kupplungsausrücker für beide Lamellenkupplungen K1 und K2 ausgebildet ist, mit einem Gehäuse 28, welches über einen Lagerballus 29 am Gehäuse 7 des Getriebes abgestützt ist. Die vorliegend als Doppelringkolbeneinrücker (auch bezeichnet als Doppel CSC, wobei CSC für 'Concentric Slave Cylinder' steht) ausgebildete Betätigungseinrichtung 27 umfasst zwei kreisringförmige und konzentrisch zueinander angeordnete Kolben 31, 32. Die in den Figuren 1 bis 4 dargestellten Variante der Betätigungseinrichtung 27 zeigt eine Ausführungsform, in welcher die beiden kreisringförmigen Kolben 31, 32 aufeinander abgleiten. Damit stellt der Innendurchmesser des äußeren Kolbens 31 der Kupplung K1 gleichzeitig die Dichtfläche für den inneren Kolben der Kupplung K2 dar. Alternativ (allerdings nicht gezeigt) ist auch eine Ausführungsform denkbar, bei der die beiden Kolben durch einen kreisringförmigen Steg voneinander getrennt sind, auf welchem die Dichtungen gleiten können. Mit einer solchen alternativen Ausführungsform kann eine gegenseitige Beeinflussung der Kolben 31, 32 durch die Dichtung komplett ausgeschlossen werden. Die vorstehend beschriebenen möglichen Ausgestaltungen der Betätigungseinrichtung 27 sind jedoch ausschließlich als Beispiele zu verstehen. So kann anstelle eines Ringskolbens auch eine andere Querschnittsform und/oder mehrere einzelne Kolben entlang des Umfangs verteilt vorgesehen sein. Ebenso kann ein elektrischer Ausrücker vorgesehen werden anstelle der Kolben/Zylinder-Einheiten. Zudem könnten auch mechanische Betätigungseinrichtungen insbesondere hebelbetätigte Einrichtungen vorgesehen sein. Die Kolbendichtungen der Ringkolben 31, 32 sind vorliegend als Elastomerdichtungen ausgeführt, die über formschlüssige Verbindungen mit den jeweiligen Kolben verbunden sind. Als formschlüssige Verbindung ist z. B. eine konische Nut im Kolben denkbar, in welche eine entsprechende Feder der Elastomerdichtung eingeknüpft wird. Alternativ sind auch eingelegte Dichtungen aus z. B. PTFE oder an die Kolben direkt angespritzte Elastomerdichtungen denkbar. Die ringförmigen Kolben 31, 32 werden von dem Einrückgehäuse 28 aufgenommen, wobei Bohrungen im Einrückergehäuse 28, welche in den Figuren nicht im Einzelnen gezeigt sind dazu dienen, die Kolben über Drucköl zu betätigen.

Zusätzlich übernimmt das Einrückergehäuse 28 die radiale Positionierung der Kolben über den Lagerballus innerhalb der Kupplungsglocke 4.

Jede der Betätigungseinheiten der Betätigungseinrichtung 27 ist über ein Betätigungslager 33, 34 mit einer Kraftübertragungseinrichtung verbunden mit der die jeweilige Betätigungskraft auf die jeweiligen Lamellenkupplung K1, K2 übertragen wird. Vorliegend umfasst jede der Kraftübertragungseinrichtungen einen Drucktopf 35A, 35B, welcher am jeweiligen Lager 33, 34 anliegt. Hierbei sei angemerkt, dass selbstverständlich jeder Drucktopf eine Elastizität aufweist, welche zu einer gewissen Federwirkung führt. Bezüglich der vorliegenden Betätigungskräfte der Doppelkupplung können die Drucktöpfe aber als "im wesentlichen starr" angenommen werden.

Zudem umfasst jede der Kraftübertragungseinrichtungen eine Hebelfeder 36A, 36B, welche am jeweiligen Drucktopf 35A, 35B anliegt. Die Hebelfedern 36A, 36B sind jeweils am zugehörigen Lamellenträger der entsprechenden Lamellenkupplung K1, K2 eingehängt, wobei dieser Einhängungspunkt den jeweiligen Drehpunkt für die Hebelfeder bildet. Über das Hebelverhältnis dieser Hebelfeder erfolgt eine Kraftübersetzung der von den Betätigungseinheiten erzeugten Betätigungskräfte.

Jede der Kraftübertragungseinrichtungen umfasst zudem ein Druckstück 37A, 37B, welches an der zugehörigen Hebelfeder 36A, 36B anliegt und in Wirkverbindung mit den Lamellen der Lamellenpakete der jeweiligen Lamellenkupplung K1, K2 ist. Die Druckstücke übertragen die Betätigungskräfte auf die Lamellenpakete der Lamellenkupplungen K1 und K2.

Die Druckstücke 37A, 37B sind in einem radial äußeren Bereich in die Verzahnung des jeweiligen eingangsseitigen Lamellenträgers axial verschiebbar eingehängt und werden durch die Verzahnung in radialer Richtung zentriert.

Am Gehäuse 28 der Betätigungseinrichtung 27 ist in einem äußeren Mantelbereich ein Stützlager 30 angeordnet, das über einen Zugtopf 52 mit dem eingangsseitigen Lamellenträger 10 der radial äußeren Lamellenkupplung K1 verbunden ist. Dabei stützt sich der Innenring des Stützlagers über einen am Gehäuse 28 ausgebildeten Bund am Gehäuse einerseits und der Außenring des Stützlagers am Zugtopf 52 andererseits in der Art und Weise ab, dass eine Kraft vom eingangsseitigen Lamellenträger 10 der Lamellenkupplung K1 zurückgeführte Betätigungskraft an das Gehäuse 28 übertragbar ist. Das Stützlager 30, welches die Betätigungskraft auf das Einrückergehäuse 28 zusammen mit dem Zugtopf 52 zurückführt, wird vorzugsweise über eine Bajonettverbindung mit dem Einrückergehäuse 28 verbunden.

Bei Druckbeaufschlagung eines der Kolben bzw. beider Kolben bewegt sich dieser bzw. bewegen sich diese in Richtung Kurbelwelle (in Fig. 1 links von der Abtriebsnabe des ZMS angeordnet) und betätigt dabei über die Mitnahme des zugehörigen Drucktopfes 35A, 35B die jeweilige Hebelfeder 36A, 36B, welche wiederum über das zugehörige Druckstück 37A, 37B die Betätigungskraft in das Lamellenpaket einleitet. Die Betätigungskraft wird bei der radial innen angeordneten Kupplung K2 über den Eingangslamellenträger 18 und das Verbindungsstück 17 (auch als Verbindungsblech bezeichnet) zwischen eingangsseitige Lamellenträger der radial innen angeordneten Lamellenkupplung K2 und dem eingangsseitigen Lamellenträger 10 der radial außen angeordneten Lamellenkupplung K1 übertragen. Der eingangsseitige Lamellenträger 10 wiederum überträgt die Betätigungskraft auf den Zugtopf 31, welcher über das Stützlager 30 mit dem Einrückergehäuse 28 verbunden ist.

Bei der radial außen angeordneten Kupplung K1 wird die eingeleitete Betätigungskraft direkt über den Eingangslamellenträger 10 auf den Zugtopf 31 und damit über das Stützlager 30 an das Einrückergehäuse 28 zurückgeführt.

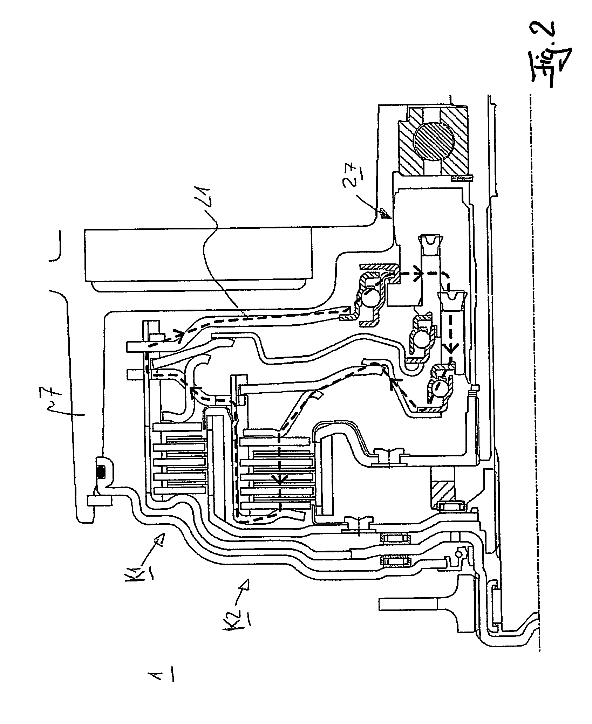

Das vorliegende Doppel-CSC erzeugt also eine auf die Drucktöpfe in Richtung Antriebseinheit wirkende Druckkraft, wobei im Gehäuse 28 eine entsprechend große und entgegengesetzt gerichtete Gegenkraft erzeugt wird, und wobei über den Zugtopf und das Stützlager wieder die Betätigungskraft mit gleichem Betrag und gleicher Richtung an das Gehäuse zurückgeführt wird, so dass sich die Betätigungskraft und die Gegenkraft im Gehäuse aufheben. Dadurch, dass das Stützlager 30 die Betätigungskraft auf das Einrückergehäuse 28 überträgt, wird also der interne Kraftfluss innerhalb der Kupplung 1 geschlossen. Dieser Verlauf der Betätigungskraft zur Betätigung der Lamellenkupplung K2 ist in Fig. 2 über die gestrichelte Linie L1 schematisch dargestellt. Vorliegend werden also zur Betätigung der Lamellenkupplungen K1 und K2 keine äußeren Kräfte frei, weshalb die Kupplung 1 keine Abstützung der Betätigungskraft an der Kupplungsglocke oder motorseitig benötigt.

Das Hydraulikmedium (Betätigungsmodul) wird der Betätigungseinrichtung über Fittings, die mit der Kupplungsglocke verbunden sind, zugeführt.

Das Einrückergehäuse 28 weist innerhalb der Kupplungsglocke eine Drehmomentabstützung auf, damit eine Lagerreibung innerhalb des Stützlagers 30 nicht zu einer Rotation des Einrückergehäuses 28 führen kann. Als Momentabstützung können hierbei die Fittings zur Druckzuführung verwendet werden. Alternativ kann auch eine separate Abstützung per Zapfen oder ähnlichem Bauteil vorgesehen sein, welches bei der Montage der Kupplung in den Kupplungsglockenboden eingreift.

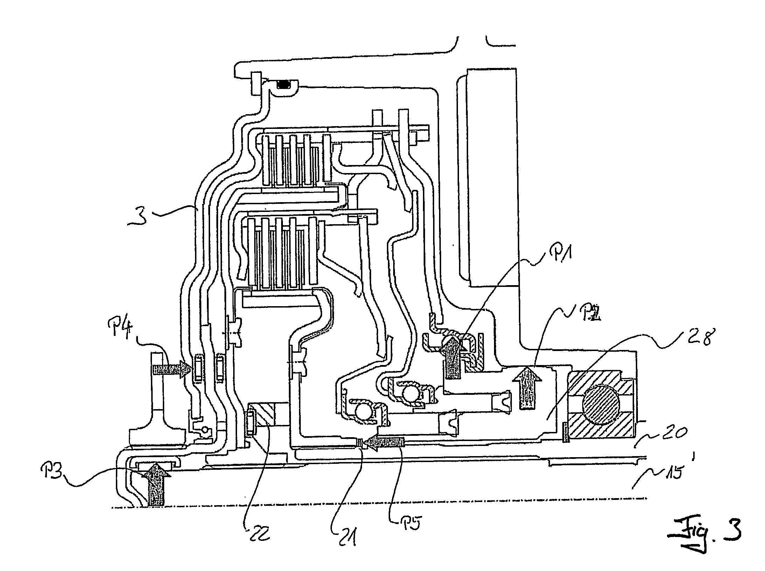

In Fig. 3 ist die radiale und axiale Lagerung der Kupplung 1 gemäß dem in Fig. 1 gezeigten Ausführungsbeispiel über Pfeile P1 bis P5 schematisch dargestellt.

In radialer Richtung betrachtet sind alle mit Motordrehzahl rotierenden Komponenten der Doppelkupplung 1 getriebeseitig auf dem Einrückergehäuse 28 und motorseitig auf der Vollwelle 15 gelagert. Pfeil P1 stellt hierbei die Abstützung des eingangsseitigen Lamellenträgers 10 der radial außen angeordneten Lamellenkupplung K1 und der mit diesem Bauteil verbundenen Bauteile am Einrückergehäuse 28 dar. Das Einrückergehäuse 28 wiederum stützt sich über den Lagerballus 29 am Glockenboden (am Getriebegehäuse) ab, wie durch Pfeil P2 dargestellt. Der Lagerballus 29 stellt den Winkelausgleich zwischen Vollwelle 15 und getriebeseitiger Lagerbasis dar. Die Vollwelle 15 stützt motorseitig über das Lager 16 den eingangsseitigen Lamellenträger 10 der radial außen angeordnet angeordneten Kupplung K1 dar, wie über Pfeil P3 dargestellt. Die mit den jeweiligen Getriebeeingangsdrehzahlen von Voll- und Hohlwelle 15, 20 rotierenden Kupplungskomponenten 14, 19 sind über die auf den Wellen sitzenden Naben/Nabenbereiche radial gelagert.

Der Lagerballus 29 kann durch eine radiale Abstützung auf der äußeren Getriebeeingangswelle, vorzugsweise über ein auf der äußeren Getriebeeingangswelle angeordnetes Radialnadellager, ersetzt werden.

Axial betrachtet stützt sich die Kupplung 1 am Kupplungsdeckel 3 ab, wobei die Abstützkraft von der Wellfeder 21 aufgebracht wird. Die axialen Lagerungspunkte sind über die Pfeile P4 und P5 angedeutet. Dabei stützt sich die Wellfeder 21 auf einem an der Hohlwelle 20 angebrachten Sicherungsring und der Nabe des ausgangsseitigen Lamellenträgers 19 der Lamellenkupplung K2 ab. Der abtriebsseitige Lamellenträger 19 der Lamellenkupplung K2 leitet diese Axialkraft über eine Distanzscheibe 22 auf ein sich auf dem abtriebsseitigen Lamellenträger 13 bzw. dessen Nabenbereich 14 befindendes Axialnadellager 23. Der abtriebsseitige Lamellenträger 13 der Lamellenkupplung K1 stützt sich wiederum über ein Axialnadellager 24 auf den eingangsseitigen Lamellenträger 10 der Kupplung K1 ab, welches sich über ein weiteres Nadellager 25 am Kupplungsdeckel 3 abstützt. Das Kupplungssystem 1 ist damit immer am Kupplungsdeckel 3 ausgerichtet. Über die Wellfeder 21 können Axialschwingungen und Toleranzen ausgeglichen werden. Die Axialnadellager 23, 24, 25 können auch durch Anlaufscheiben ersetzt werden. Die vorstehend beschriebene Art der Axiallagerung der vorliegenden Kupplung 1 kann auch unabhängig von dem vorstehend beschriebenen intern geschlossenen Kraftfluss, also auch bei anderen Arten des Betätigungskraftflusses verwendet werden und stellt eine separat anwendbare Lösung allgemein für Doppel(nass)kupplungen dar.

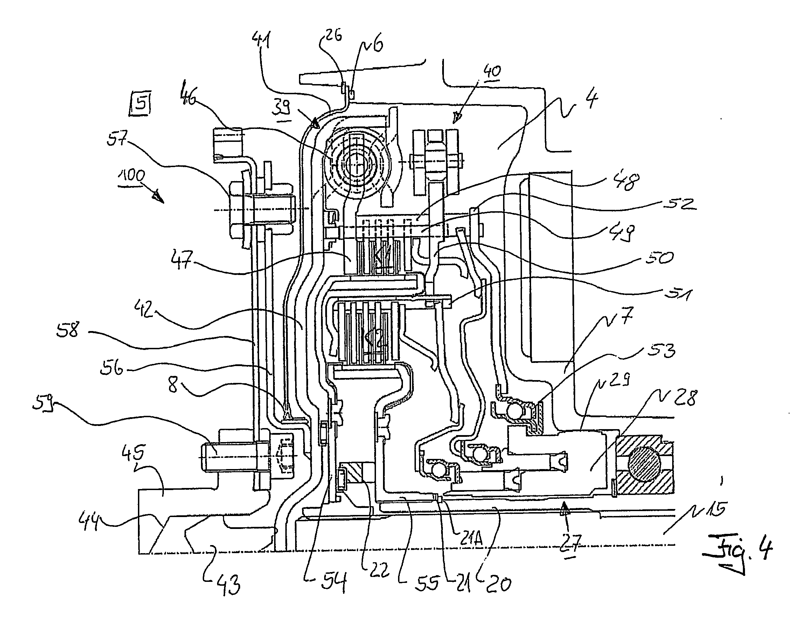

In Fig. 4 ist ein weiteres Ausführungsbeispiel der vorliegenden Mehrfachkupplungseinrichtung gezeigt, welche hinsichtlich des Betätigungskraftflusskonzeptes vollständig den bereits vorstehend erläuterten Ausführungsbeispielen entspricht. So stimmen sämtliche vorstehend ausgeführten Merkmale betreffend der Betätigungseinrichtung stimmen zwischen den Ausführungsbeispielen gemäß Fig. 1 bis 3 und gemäß Fig. 4 überein. Weiterhin ist vorliegend wiederum ein Lagerballus vorgesehen, um das Betätigungsgehäuse 28 am Getriebegehäuse 7 radial abzustützen und einen Achsversatz auszugleichen.

Das Ausführungsbeispiel nach Fig. 4 unterscheidet sich vom vorstehenden Ausführungsbeispiel jedoch in der zur Dämpfung der vom Verbrennungsmotor kommenden Drehungleichförmigkeiten verwendeten Elemente, ZMS und/ oder Fliehkraftpendel.

So sind gemäß dem Ausführungsbeispiel nach Fig. 4 sowohl das ZMS 39 als auch ein Fliehkraftpendel 40 in der Kupplungsglocke 4 angeordnet, welche durch einen Kupplungsdeckel 41 gegenüber einem Trockenraum abgrenzt ist. Der Kupplungsdeckel 41 ist vorliegend nicht zur Axiallagerung der Kupplung vorgesehen. Vielmehr stellt er ausschließlich die Trennung zwischen Nassraum 4 und Trockenraum 5 über die Dichtungseinrichtungen 6 sowie 8 dar.

Das ZMS 39 umfasst ein primärseitiges ZMS-Blech 42, welches vorliegend topfartig ausgebildet ist und in seinem radial inneren Bereich einen Pilotzapfen 43 umfasst, welcher in eine Ausnehmung 44 der Kurbelwelle 45 eingreift und das primärseitige ZMS-Blech zentriert. In seinem radial äußeren Bereich weist das primärseitige ZMS-Blech 42 taschenförmige Bereiche auf, in denen Federelemente aufgenommen sind, wobei die nicht in Kontakt zu diesen Taschen stehenden Endbereiche der Energiespeicher 46 mit einem sekundärseitigen ZMS-Flansch 47 in Wirkverbindung stehen. Der sekundärseitige ZMS-Flansch 47 ist mit einem im wesentlichen zylindrischen Verzahnungsblech 48 über die Nieten 49 verbunden, wobei das Verzahnungsblech 48 als eingangsseitiger Lamellenträger der radial außen angeordneten Kupplung K1 dient.

Der eingangsseitige Lamellenträger 48 ist über das Verbindungsblech 50 mit dem eingangsseitigen Lamellenträger 51 der radial innen angeordneten Lamellenkupplung K2 verbunden. Dieses Verbindungsblech 50 ist außerdem mit dem Fliehkraftpendel 40 verbunden (vorliegend: einstückig ausgebildet), so dass das ZMS 39 und das Fliehkraftpendel 40 gemeinsam mit dem Verzahnungsblech 48 verbunden sind (vorzugsweise über die Nieten 49) und dementsprechend parallel geschalten sind.

Das Verzahnungsblech 48 ist über den Zugtopf 52 mit dem Stützlager 53 verbunden, welches am Einrückergehäuse 28 (wie schon vorstehend beschrieben) angeordnet ist.

Der abtriebsseitige Lamellenträger 54 der Lamellenkupplung K1 ist an der Hohlwelle 15 drehfest angeordnet. Der abtriebsseitige Lamellenträger 55 der Lamellenkupplung K2 ist an der Hohlwelle 20 drehfest angeordnet. Der abtriebsseitige Lamellenträger 54 der Lamellenkupplung K2 ist über die Wellfeder 21 in Verbindung mit dem Sicherungselement 21A und dem Verbindungselement 22 gegen den abtriebsseitigen Lamellenträger 54 unter Zwischenlage eines Axiallagers vorbelastet. Der abtriebsseitige Lamellenträger 54 der Lamellenkupplung K1 ist unter Zwischenlage eines weiteren Axiallagers gegen den primärseitigen ZMS-Flansch 42 (auch als ,ZMS- Blech' bezeichnet) belastet. Am primärseitigen ZMS-Blech 42 ist eine Drive plate 56 fest angeordnet, welches über eine Verschraubung 57 mit einer Flexplate 58 verbunden ist, wobei die Flexplate über eine weitere Verschraubung 59 mit der Kurbelwelle 45 verbunden ist.

Die Betätigungseinrichtung 27 umfasst wiederum Betätigungseinheiten, welche vorliegend als Kolben/zylinder-Einheiten ausgebildet sind, welche jeweils über die Kraftübertragungseinrichtungen bestehend aus Drucktopf, Hebelfeder und Druckstück auf die jeweiligen Lamellenpakete der Lamellenkupplung K1 und K2 wirken, wie bereits vorstehend beschrieben.

Die Kupplung 100 gemäß Fig. 4 ist also über die Flex plate 58 an den Verbrennungsmotor angebunden. Die Drive plate 56 und das primärseitige ZMS-Blech sind direkt (vorzugsweise öldicht) miteinander verbunden und nehmen den axial dazwischen geschalteten Kupplungsdeckel 41 mit Radialwellendichtring 8 auf.

Die primärseitigen Komponenten des ZMS sind über einen Pilotzapfen 43 direkt auf der Kurbelwelle 45 gelagert.

Der sekundärseitige Flansch 47 des ZMS stellt vorliegend gleichzeitig die Endlamelle der Lamellenkupplung K1 dar.

Der eingangsseitige Lamellenträger 48 der Lamellenkupplung K1 ist (wie bereits beschrieben) als vernietete Variante ausgeführt.

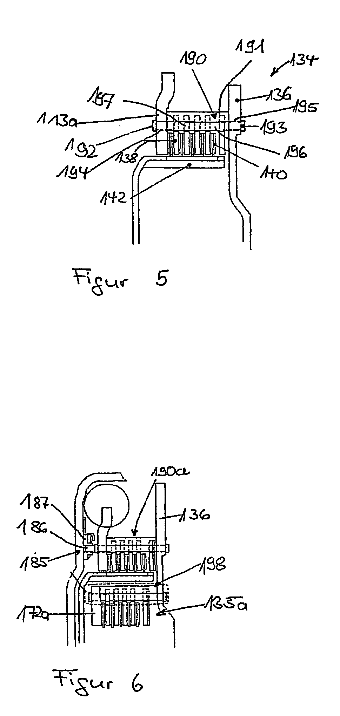

Ausführungsbeispiele eines vernieteten Lamellenträgers sind in den Fig. 5 und 6 dargestellt.

Figur 5 zeigt einen gebauten Lamellenträger 134 (vergleichbar dem eingangsseitigen Lamellenträger der Figur 4) im Detail als Schnittdarstellung. Der Lamellenträger 134 wird aus dem Flanschteil 113a, der Trägerscheibe 136 und axial dazwischen angeordneten, über den Umfang verteilten Verbindungselementen 190 gebildet. In dem gezeigten Ausführungsbeispiel sind die Verbindungselemente 190 aus vorgebogenen Blechteilen 191 gebildet, die sich axial erstreckende Nietzapfen 192, 193 aufweisen, die durch entsprechende Öffnungen 194, 195 in dem Flanschteil 113a beziehungsweise Trägerscheibe 136 geführt und von außen gegen diese vernietet sind. Die in Umfangsrichtung weisenden Enden der Blechteile 191 sind zur Ausbildung von Zahnflanken 196 nach radial innen abgekantet oder gebogen, so dass sich im Querschnitt der Blechteile 191 ein Zahnflankenprofil ausbildet, an dem die Lamellen 138 eingehängt sind, die hierzu über ein komplementäres Außenprofil 197 verfügen, so dass die Lamellen 138 an dem Lamellenträger 134 zentriert sind und das an dem Lamellenträger 134 anliegende Drehmoment auf die Lamellen 138 übertragen wird. Die Lamellen 138 sind abwechselnd mit den Reiblamellen 140, die in den ausgangsseitigen Lamellenträger 142 drehfest und axial begrenzt verlagerbar eingehängt sind, geschichtet.

Figur 6 zeigt eine zu dem vorstehend beschriebenen Lamellenträger alternative Ausführung in Form des Lamellenträgers 135a in gebauter Ausführung. Der Lamellenträger 135a weist den Verbindungselementen 190 der Figur 5 vergleichbar ausgebildete Verbindungselemente 198 auf, die zwischen der Endlamelle 172a und der Trägerscheibe 136 vernietet sind. Im Weiteren zeigt die Figur 6 ein Verbindungselement 190a mit einem axial verlängerten Stift 186 auf, das beispielsweise an mehreren Umfangspositionen das Verbindungselement 190 der Figur 5 ersetzt und dadurch einen Zugriff des Lamellenträgers 134 auf die Reibeinrichtung 185 ermöglicht, indem die Stifte 186 den Reibring 187 in Umfangsrichtung gegenüber dem Gehäuse des Kupplungsaggregats mitnehmen und so die Reibeinrichtung steuern.

Die einzelnen Verzahnungsbleche haben gemäß dem in Fig. 4 gezeigten Ausführungsbeispiel zwei unterschiedliche Längen und sind über den Umfang abwechselnd verteilt. Die kürzeren Verzahnungsbleche sind mit dem Verbindungsblech 50 der eingangsseitigen Lamellenträger 48 und 51 der Lamellenkupplung K1 und K2 vernietet. Die längeren Verzahnungsbleche sind mit dem Zugtopf 52, der die Betätigungskräfte zurückführt auf das Einrückergehäuse 28 verbunden. Durch diese abgestuften Verzahnungsbleche wird erreicht, dass das Fliehkraftpendel verdrehspielfrei an den sekundärseitigen Flansch des ZMS angebunden ist. Damit ist der Zugtopf 52 form- und kraftschlüssig mit dem eingangsseitigen Lamellenträger 48 der Lamellenkupplung K1 verbunden und kann die auftretenden Betätigungskräfte aufnehmen.

### Bezugszeichenliste

| | |
|---|---|
| 1 | Kupplung |
| 2 | Antriebsnabe |
| 3 | Kupplungsdeckel |
| 4 | Nassraum |
| 5 | Trockenraum |
| 6 | Ohrring |
| 7 | Gehäuse |
| 8 | Radialwellendichtring |
| 9 | Kupplungsnabe |
| 10 | Lamellenträger |
| 11 | Lamelle |
| 12 | Lamelle |
| 13 | Lamellenträger |
| 14 | Nabe |
| 15 | Getriebeeingangswelle |
| 16 | Radiallager |
| 17 | Verbindungsblech |
| 18 | Lamellenträger |
| 19 | Lamellenträger |
| 20 | Getriebeeingangswelle |
| 21 | Wellfeder |
| 22 | Verbindungsstück |
| 23 | Lager |
| 24 | Lager |
| 25 | Lager |
| 26 | Sicherungselement |
| 27 | Betätigungseinrichtung |
| 28 | Gehäuse |
| 29 | Lagerballus |
| 30 | Stützlager |
| 31 | Kolben |
| 32 | Kolben |
| 33 | Betätigungslager |
| 34 | Betätigungslager |
| 35A | Drucktopf |
| 35B | Drucktopf |
| 36A | Hebelfeder |
| 36B | Hebelfeder |
| 37A | Druckstück |
| 37B | Druckstück |
| 38 | Stücklager |
| 39 | ZMS |
| 40 | Fliehkraftpendel |
| 41 | Kupplungsdeckel |
| 42 | ZMS-Blech |
| 43 | Pilotzapfen |
| 44 | Ausnehmung |
| 45 | Kurbelwelle |
| 46 | Energiespeicher |
| 47 | ZMS-Flansch |
| 48 | Verzahnungsblech |
| 49 | Nieten |
| 50 | Verbindungsblech |
| 51 | eingangsseitiger Lamellenträger |
| 52 | Zugtopf |
| 53 | Stützlager |
| 54 | abtriebsseitiger Lamellenträger |
| 55 | |
| 56 | Drive plate |
| 57 | Verschraubung |
| 58 | Flexplate |
| 59 | Verschraubung |
| | |
| K1 | Lamellenkupplungen |
| K2 | Lamellenkupplungen |

## Patentansprüche

1. Mehrfachkupplungsvorrichtung für einen Antriebsstrang mit einer Antriebseinheit und einem nachfolgend angeordneten Getriebe, die mit einer Antriebswelle der Antriebseinheit verbunden und in einer nicht mit der Antriebswelle der Antriebseinheit mitrotierenden Kupplungsglocke aufgenommen ist, mit zwei Lamellenkupplunger (K1, K2), die jeweils einen eingangsseitigen und einen ausgangsseitigen Lamellenträger (10, 13, 18, 19) und sich in axialer Richtung abwechselnde Lamellen (11, 12) aufweisen, und mit einer Betätigungseinrichtung (27), wobei der eingangsseitige Lamellenträger (10, 18) zumindest einer der Lamellenkupplungen (K1, K2) mit dem Gehäuse (28) der Betätigungseinrichtung (27) über ein Abstützblech bzw. einen Abstütztopf (52) und ein Stützlager (30) in der Art verbunden ist, dass ein Kraftfluss einer von der Betätigungseinrichtung (27) erzeugten Betätigungskraft über Abstützblech bzw. Abstütztopf (52) und Stützlager (52) an das Gehäuse (28) der Betätigungseinrichtung (27) zurückgeführt wird, so dass ein innerhalb der Mehrfachkupplungsvorrichtung geschlossener Kraftfluss vorliegt), **dadurch gekennzeichnet, dass** ein Gehäuse (28) der Betätigungseinrichtung (27) über einen Lagerballus (29) an der Kupplungsglocke radial abgestützt ist.

2. Mehrfachkupplungsvorrichtung nach Anspruch 1, **dadurch gekennzeichnet, dass** die Lamellenkupplungen (K1, K2) radial übereinander angeordnet sind und der eingangsseitige Lamellenträger (10) der radial äußeren Lamellenkupplung (K1) am Gehäuse (28) der Betätigungseinrichtung (27) über das Abstützblech bzw. den Abstütztopf (52) radial drehbar jedoch axial fest abgestützt ist, so dass ein Kraftfluss einer von der Betätigungseinrichtung (27) erzeugten Betätigungskraft über die axial feste Abstützung des radial äußeren eingangsseitigen Lamellenträgers (10) am Gehäuse (28) der Betätigungseinrichtung (27) abgestützt ist und ein innerhalb der Kupplungsvorrichtung geschlossener Kraftfluss vorliegt.

3. Mehrfachkupplungsvorrichtung nach Anspruch 1 oder 2, wobei die Lamellenkupplungen (K1, K2) radial übereinander angeordnet sind und wobei der eingangsseitige Lamellenträger (18) der radial inneren Lamellenkupplung (K2) über ein Verbindungsblech (17) oder einen Verbindungstopf am eingangsseitigen Lamellenträger (10) der radial äußeren Lamellenkupplung (K1) abgestützt ist.

4. Mehrfachkupplungsvorrichtung nach einem der Ansprüche 1 bis 3, wobei die Lamellenkupplungen (K1, K2) radial übereinander angeordnet sind und der eingangsseitige Lamellenträger (10) der radial äußeren Lamellenkupplung (K1) mit einer Abtriebseite eines Zweimassenschwungrades (39) und/ oder einem Drehschwingungstilgers drehfest verbunden ist.

5. Mehrfachkupplungsvorrichtung nach Anspruch 4, wobei der eingangseitige Lamellenträger (10) der radial äußeren Lamellenkupplung (K1) als ein Kupplungstopf aufgebildet ist, der eine Kupplungsnabe (9) aufweist, an der eine Abtriebsnabe (2) des Zweimassenschwungrades (39) drehfest angeordnet ist, und wobei der Kupplungstopf an einer Getriebeeingangswelle (15) radial abgestützt ist.

6. Mehrfachkupplungsvorrichtung nach Anspruch 4 oder 5, mit einem Kupplungsdeckel (41), der an der Kupplungsglocke abgestützt ist, wobei die ausgangsseitigen Lamellenträger der Lamellenkupplungen (K1, K2) und der eingangsseitige Lamellenträger (10) der äußeren Lamellenkupplung (K1), vorzugsweise über eine Wellfeder (21), gegen den Kupplungsdeckel (41) vorbelastet sind.

7. Mehrfachkupplungsvorrichtung nach Anspruch 4, wobei der eingangseitige Lamellenträger (10) der radial äußeren Lamellenkupplung (K1) als im wesentlichen zylinderförmiges Verzahnungsblech (48) ausgebildet ist, das mit einem Ausgangsflansch (47) des Zweimassenschwungrades (39) und dem Abstützblech oder Abstütztopf (52) verbunden ist.

8. Mehrfachkupplungsvorrichtung nach Anspruch 4 oder 5, wobei die ausgangsseitigen Lamellenträger (13, 19) der Lamellenkupplungen (K1, K2) und der eingangsseitige Lamellenträger (10) der äußeren Lamellenkupplung (K1), vorzugsweise über eine Wellfeder (21), gegen ein primärseitiges Blech (42) des Zweimassenschwungrades (39) vorbelastet sind.

9. Mehrfachkupplungsvorrichtung nach einem der Ansprüche 1 bis 8, wobei die Betätigungseinrichtung (27) für jede der Lamellenkupplungen (K1, K2) eine eigene Betätigungseinheit aufweist, die ein Betätigungslager (33, 34) und eine Kraftübertragungseinrichtung umfasst, wobei die Kraftübertragungseinrichtungen jeweils einen Drucktopf (35A, 35B), eine Hebelfeder (36A, 36B) und ein Druckstück (37A, 37B) umfasst, wobei der Drucktopf (35A, 35B) mit dem Betätigungslager (33, 34) und das Druckstück (37A, 37B) mit den Lamellen (11, 12) der zugehörigen Lamellenkupplung (K1, K2) in Wirkverbindung sind, und wobei die Hebelfeder (36A, 36B) am jeweiligen eingangsseitigen Lamellenträger (10, 18) der zugehörigen Lamellenkupplung (K1, K2) eingehängt und mit Drucktopf (35A, 35B) und Druckstück (37A, 37B) in Wirkverbindung ist.

10. Mehrfachkupplungsvorrichtung nach einem der Ansprüche 1 bis 9, wobei die Lamellenkupplungen (K1, K2) im umbetätigten Zustand geöffnet und im betätigten Zustand geschlossen aufgebildet sind.

11. Mehrfachkupplungsvorrichtung nach einem der Ansprüche 1 bis 10, wobei die Betätigungseinheiten der Betätigungseinrichtung (27) jeweils eine Druckkraft als Betätigungskraft erzeugen, welche am Gehäuse (28) der Betätigungseinrichtung (27) über das Abstützblech bzw. den Abstütztopf (52), der als Zugtopf wirkt, abgestützt ist.

12. Mehrfachkupplungsvorrichtung, insbesondere nach einem der Ansprüche 1 bis 11, für einen Antriebsstrang mit einer Antriebseinheit und einem nachfolgend angeordneten Getriebe, die mit einer Antriebswelle der Antriebseinheit verbunden und in einer nicht mit der Antriebswelle der Antriebseinheit mitrotierenden Kupplungsglocke aufgenommen ist, mit zwei nasslaufenden Lamellenkupplungen (K1, K2), die jeweils einen eingangsseitigen (19, 18) und einen ausgangsseitigen Lamellenträger (13, 19) und sich in axialer Richtung abwechselnde Lamellen aufweisen, wobei am eingangsseitigen Lamellenträger (10, 18) einer der Lamellenkupplungen (K1, K2) ein Fliehkraftpendel, vorzugsweise parallel zu einem Zweimassenschwungrad (39), angeordnet ist.

## Claims

1. Multiple clutch device for a drive train with a drive unit and with a following transmission, which device is connected to a drive shaft of the drive unit and is received in a bell-shaped clutch casing not corotating with the drive shaft of the drive unit, with two multi-plate clutches (K1, K2) which have in each case an input-side and an output-side plate carrier (10, 13, 18, 19) and plates (11, 12) alternating in the axial direction, and with an actuating device (27), the input-side plate carrier (10, 18) of at least one of the multi-plate clutches (K1, K2) being connected to the housing (28) of the actuating device (27) via a support sheet or support pot (52) and a supporting bearing (30) in such a way that a force flux of an actuating force generated by the actuating device (27) is returned to the housing (28) of the actuating device (27) via the support sheet or support pot (52) and the supporting bearing (30), so that a force flux closed within the multiple clutch device is present, **characterized in that** a housing (28) of the actuating device (27) is supported radially on the bell-shaped clutch casing via a bearing block (29).

2. Multiple clutch device according to Claim 1, **characterized in that** the multi-plate clutches (K1, K2) are arranged radially one above the other, and the input-side plate carrier (10) of the radially outer multi-plate clutch (K1) is supported radially rotatably, but axially fixedly, on the housing (28) of the actuating device (27) via the support sheet or support pot (52), so that a force flux of an actuating force generated by the actuating device (27) is supported on the housing (28) of the actuating device (27) via the axially fixed support of the radially outer input-side plate carrier (10) and a force flux closed within the clutch device is present.

3. Multiple clutch device according to Claim 1 or 2, the multi-plate clutches (K1, K2) being arranged radially one above the other, and the input-side plate carrier (18) of the radially inner multi-plate clutch (K2) being supported on the input-side plate carrier (10) of the radially outer multi-plate clutch (K1) via a connection sheet (17) or connection pot.

4. Multiple clutch device according to one of Claims 1 to 3, the multi-plate clutches (K1, K2) being arranged radially one above the other, and the input-side plate carrier (10) of the radially outer multi-plate clutch (K1) being connected fixedly in terms of rotation to an output side of a two-mass flywheel (39) and/or to a torsional vibration absorber.

5. Multiple clutch device according to claim 4, the input-side plate carrier (10) of the radially outer multi-plate clutch (K1) being designed as a clutch pot having a clutch hub (9), on which an output hub (2) of the two-mass flywheel (39) is arranged fixedly in terms of rotation, and the clutch pot being supported radially on a transmission input shaft (15).

6. Multiple clutch device according to Claim 4 or 5, with a clutch cover (41) which is supported on the bell-shaped clutch casing, the output-side plate carriers (13, 19) of the multi-plate clutches (K1, K2) and the input-side plate carrier (10) of the outer multi-plate clutch (K1) being preloaded against the clutch cover (41) preferably via a corrugated spring (21).

7. Multiple clutch device according to Claim 4, the input-side plate carrier (10) of the radially outer multi-plate clutch (K1) being designed as an essentially cylindrical toothing sheet (48) which is connected to an output flange (47) of the two-mass flywheel (39) and to the support sheet or support pot (52).

8. Multiple clutch device according to Claim 4 or 5, the output-side plate carriers (13, 19) of the multi-plate clutches (K1, K2) and the input-side plate carrier (10) of the outer multi-plate clutch (K1) being preloaded against a primary-side sheet (42) of the two-mass flywheel (39) preferably via a corrugated spring (21).

9. Multiple clutch device according to one of Claims 1 to 8, the actuating device (27) for each of the multi-plate clutches (K1, K2) having a dedicated actuating unit which comprises an actuating bearing (33, 34) and a force transmission device, the force transmission devices comprising in each case a pressure pot (35A, 35B), a lever spring (36A, 36B) and a pressure piece (37A, 37B), the pressure pot (35A, 35B) being operatively connected to the actuating bearing (33, 34) and the pressure piece (37A, 37B) being operatively connected to the plates (11, 12) of the associated multi-plate clutch (K1, K2), and the lever spring (36A, 36B) being suspended on the respective input-side plate carrier (10, 18) of the associated multi-plate clutch (K1, K2) and being operatively connected to the pressure pot (35A, 35B) and pressure piece (37A, 37B).

10. Multiple clutch device according to one of Claims 1 to 9, the multi-plate clutches (K1, K2) being designed to be open in the non-actuated state and to be closed in the actuated state.

11. Multiple clutch device according to one of Claims 1 to 10, the actuating units of the actuating device (27) generating in each case a pressure force as actuating force which is supported on the housing (28) of the actuating device (27) via the support sheet or support pot (52) which acts as a tension pot.

12. Multiple clutch device, particularly according to one of Claims 1 to 11, for a drive train with a drive unit and with a following transmission, which device is connected to a drive shaft of the drive unit and is received in a bell-shaped clutch casing not corotating with the drive shaft of the drive unit, with two wet-running multi-plate clutches (K1, K2) which have in each case an input-side (10, 18) and an output-side plate carrier (13, 19) and plates alternating in the axial direction, a centrifugal pendulum being arranged, preferably parallel to a two-mass flywheel (39), on the input-side plate carrier (10, 18) of one of the multi-plate clutches (K1, K2).

## Revendications

1. Système à embrayages multiples pour une chaîne cinématique dotée d'une unité en d'entraînement en entrée et d'une boîte de vitesses disposée à la suite reliée à un arbre d'entraînement en entrée de l'unité d'entraînement en entrée et logée dans une cloche d'embrayage tournant conjointement avec l'arbre d'entraînement en entrée de l'unité d'entraînement en entrée, avec deux embrayages à lamelles (K1, K2) comportant respectivement des supports de lamelles (10, 13, 18, 19) de côté d'entrée et de côté de sortie et les lamelles (11, 12) s'étendant de façon alternée dans la direction axiale, et avec un dispositif d'actionnement (27), le support de lamelles (10, 18) de côté d'entrée d'au moins un des embrayages à lamelles (K1, K2) étant relié au carter (28) du dispositif d'actionnement (27) par le biais d'une tôle de soutien et/ou d'un pot de soutien (52) et un palier d'appui (30) étant relié de telle sorte qu'un flux de force d'une force d'actionnement produite par le dispositif d'actionnement (27) est ramené au carter (28) du dispositif d'actionnement (27) par le biais de la tôle de soutien et/ou du pot de soutien (52) et du palier d'appui (30), de sorte qu'un flux de force fermé se produit à l'intérieur du système à embrayages multiples, **caractérisé en ce qu'**un carter (28) du dispositif d'actionnement (27) est maintenu dans le plan radial contre la cloche d'embrayage par le biais d'un élément de palier (29).

2. Système à embrayages multiples selon la revendication 1, **caractérisé en ce que** des embrayages à lamelles (K1, K2) sont disposés les uns au-dessus des autres dans le plan radial et que le support de lamelles (10) de côté d'entrée de l'embrayage à lamelles (K1) extérieur dans le plan radial est maintenu au niveau du carter (28) du dispositif d'actionnement (27) par le biais de la tôle de soutien et/ou du pot de soutien (52) de façon à pouvoir pivoter dans le plan radial tout en étant maintenu fixement dans le plan axial, de sorte qu'un flux de force d'une force d'actionnement produite par le dispositif d'actionnement (27) est maintenu au niveau du carter (28) du dispositif d'actionnement (27) par le biais de l'appui fixe dans le plan axial du support de lamelles (10) de côté d'entrée extérieur dans le plan radial et qu'un flux de force fermé se produit à l'intérieur du dispositif d'embrayage.

3. Système à embrayages multiples selon la revendication 1 ou 2, les embrayages à lamelles (K1, K2) étant disposés les uns au-dessus des autres dans le plan radial et le support de lamelles (18) de côté d'entrée de l'embrayage à lamelles (K2) intérieur dans le plan radial étant maintenu au niveau du support de lamelles (10) de côté d'entrée de l'embrayage à lamelles (K1) extérieur dans le plan radial par le biais d'une tôle de jonction (17) ou d'un pot de jonction.

4. Système à embrayages multiples selon l'une quelconque des revendications 1 à 3, les embrayages à lamelles (K1, K2) étant disposés les uns au-dessus des autres dans le plan radial et le support de lamelles (10) de côté d'entrée de l'embrayage à lamelles (K1) extérieur dans le plan radial étant relié de façon solidaire en rotation avec un côté d'entraînement en sortie d'un volant à deux masses (39) et/ou d'un amortisseur de vibrations oscillantes.

5. Système à embrayages multiples selon la revendication 4, le support de lamelles (10) de côté d'entrée de l'embrayage à lamelles (K1) extérieur dans le plan radial prenant la forme d'un pot d'embrayage comportant un moyeu d'embrayage (9) au niveau duquel un moyeu d'entraînement en sortie (2) du volant à deux masses (39) est disposé de façon solidaire en rotation, et le pot d'embrayage étant maintenu dans le plan radial au niveau d'un arbre d'entrée de boîte de vitesses (15).

6. Système à embrayages multiples selon la revendication 4 ou 5, avec un cache d'embrayage (41) maintenu au niveau de la cloche d'embrayage, le support de lamelles (13, 19) du côté de sortie des embrayages à lamelles (K1, K2) et le support de lamelles (10) de côté d'entrée de l'embrayage à lamelles (K1) extérieur étant de préférence présollicités contre le cache d'embrayage (41) par le biais d'un ressort ondulant (21).

7. Système à embrayages multiples selon la revendication 4, le support de lamelles (10) de côté d'entrée de l'embrayage à lamelles (K1) extérieur dans le plan radial prenant pour l'essentiel une forme de tôle à endentement d'extrémité cylindrique (48) reliée à une bride de sortie (47) du volant à deux masses (39) et à la tôle de soutien ou au pot de soutien (52).

8. Système à embrayages multiples selon la revendication 4 ou 5, les supports de lamelles (13, 19) de côté de sortie des embrayages à lamelles (K1, K2) et le support de lamelles (10) de côté d'entrée de l'embrayage à lamelles (K1) extérieur étant de préférence présollicités contre une tôle (42) disposée du côté principal du volant à deux masses (39) par le biais d'un ressort ondulant (21).

9. Système à embrayages multiples selon l'une quelconque des revendications 1 à 8, le dispositif d'actionnement (27) comprenant pour chacun des embrayages à lamelles (K1, K2) une unité d'actionnement propre comprenant un palier d'actionnement (33, 34) et un dispositif de transmission de force, les dispositifs de transmission de force comprenant respectivement un pot de pression (35A, 35B), un ressort de levier (36A, 36B) et une pièce de pression (37A, 37B), le pot de pression (35A, 35B) étant en liaison active avec le palier d'actionnement (33, 34) et la pièce de pression (37A, 37B) étant en liaison active avec les lamelles (11, 12) de l'embrayage à lamelles (K1, K2) associé et le ressort de levier (36A, 36B) étant accroché au support de lamelles (10, 18) de côté d'entrée respectif de l'embrayage à lamelles (K1, K2) associé et en liaison active avec le pot de pression (35A, 35B) et la pièce de pression (37A, 37B).

10. Système à embrayages multiples selon l'une quelconque des revendications 1 à 9, les embrayages à lamelles (K1, K2) étant réalisés de façon ouverte à l'état non actionné et de façon fermée à l'état actionné.

11. Système à embrayages multiples selon l'une quelconque des revendications 1 à 10, les unités d'actionnement du dispositif d'actionnement (27) produisant respectivement une force de pression prenant la forme d'une force d'actionnement maintenue au niveau du carter (28) du dispositif d'actionnement (27) par le biais de la tôle de soutien et/ou du pot de soutien (52), agissant sous la forme d'un pot de traction.

12. Système à embrayages multiples, notamment selon l'une quelconque des revendications 1 à 11, pour une chaîne cinématique dotée d'une unité d'entraînement en entrée et d'une boîte de vitesses disposée à la suite reliée à un arbre d'entraînement en entrée de l'unité d'entraînement en entrée et logée dans une cloche d'embrayage tournant conjointement avec l'arbre d'entraînement en entrée de l'unité d'entraînement en entrée, avec deux embrayages à lamelles (K1, K2) tournant à l'état mouillé comportant respectivement un support de lamelles (10, 18) de côté d'entrée et un support de lamelles (13, 19) de côté de sortie et les lamelles s'étendant de façon alternée dans la direction axiale, un pendule de force centrifuge étant disposé au niveau du support de lamelles (10, 18) de côté d'entrée d'un des embrayages à lamelles (K1, K2), de préférence parallèlement à un volant à deux masses (39).
